# EUROPEAN PATENT APPLICATION

(11) **EP 4 585 561 A1**
(43) Date of publication of application: **16.07.2025**
(21) Application number: 24767351.0
(22) Date of filing: 29.02.2024
(51) Int. Cl.: C01B 32/174, H01M 4/62, H01M 4/131, C01B 32/162, B01J 8/24, B01J 8/18, B01J 23/22, B01J 23/75, H01M 4/02

(54) **HIGH-DENSITY CARBON NANOTUBE COMPOSITION, METHOD FOR PREPARING SAME, CARBON NANOTUBE DISPERSION LIQUID COMPRISING SAME, AND POSITIVE ELECTRODE SLURRY COMPOSITION**

(30) Priority: 03.03.2023 KR 20230028574; 03.03.2023 KR 20230028575
(71) Applicant: LG CHEM, LTD., Seoul 07336 (KR)
(72) Inventor: HWANG, Doo Sung, Daejeon 34122 (KR); CHOI, Jung Ho, Daejeon 34122 (KR); KIM, Dong Eun, Daejeon 34122 (KR); NA, You Wan, Daejeon 34122 (KR); KIM, Se Hyun, Daejeon 34122 (KR)
(74) Representative: Goddar, Heinz J.
(86) International application number: PCT/KR2024/002657
(87) International publication number: WO 2024/186062

(57) **Abstract**

The present invention relates to a carbon nanotube composition having a volume density of 500/mm³ to 2500/mm³ defined by Equation 1, wherein carbon nanotubes in the carbon nanotube composition have a high bulk density while maintaining a bundled shape, and thus, are excellent in both dispersibility and productivity.

## Description

### TECHNICAL FIELD

### Cross-reference to Related Applications

This application claims the benefit of Korean Patent Application Nos. 10-2023-0028574, filed on March 3, 2023, and 10-2023-0028575, filed on March 3, 2023, in the Korean Intellectual Property Office, the disclosures of which are incorporated herein in their entirety by reference.

### Technical Field

The present invention relates to a carbon nanotube composition with high density and bulk density, a method for preparing the same, and a dispersion and a positive electrode slurry composition including the carbon nanotube composition.

### BACKGROUND ART

Carbon nano materials may be divided into fullerene, carbon nanotubes (CNT), graphene, graphite nano plates, and the like according to the shape of a material, and among these, carbon nanotubes are macromolecules in which the surface of a hexagonal honeycomb-shaped graphite in which one carbon atom is bonded to three other carbon atoms is roundly rolled to a nano-sized diameter.

Carbon nanotubes are hollow, and thus, are lightweight, and have electrical conductivity as good as copper, thermal conductivity as excellent as diamond, and tensile strength as good as steel. According to the rolled-shape thereof, carbon nanotubes may be divided into single-walled carbon nanotubes (SWCNT), multi-walled carbon nanotubes (MWCNT), and rope carbon nanotubes.

Recently, the area in which studies have been most actively conducted with respect to the use of carbon nanotubes is the field of lithium secondary batteries. The ultimate goal of lithium secondary batteries is to store more electrical energy in a smaller size, and as one of the methods to improve the electrode density of lithium secondary batteries to manufacture electrodes with higher energy density per unit volume, a method for applying carbon nanotubes as a conductive material is being studied. Generally, a high-density electrode is formed by molding electrode active material particles having a size of several µm to tens of µm by a high-pressure press, so that it is likely that the particles are deformed during the molding process, gaps between the particles are reduced, and electrolyte permeability is degraded. In order to solve the above-described problems, a material having excellent electrical conductivity and strength is used as a conductive material in the manufacture of an electrode, and carbon nanotubes are also widely used as a conductive material due to the excellent strength and electrical conductivity thereof. When a conductive material is used in the manufacture of an electrode, the conductive material is dispersed between compressed electrode active materials, thereby maintaining micropores between particles of the active materials to facilitate the penetration of an electrolyte solution and also to reduce the resistance in the electrode due to the excellent conductivity thereof.

However, in the use of carbon nanotubes as a conductive material, the most problematic issue is the low dispersibility of the carbon nanotubes themselves. Due to strong Van der Waals attraction acting therebetween, carbon nanotubes have a problem of being aggregated together instead of being stably dispersed in an aqueous solution. When carbon nanotubes are aggregated in a dispersion, the processability of the dispersion decreases, making it difficult for the dispersion to be uniformly applied, so that it is preferable that the dispersion is applied in a state in which the viscosity thereof is maximally lowered.

Carbon nanotubes are divided into a bundled type and an entangled type depending on the shape thereof, and the bundled type refers to a secondary shape in the form of a bundle or a rope in which a plurality of carbon nanotube units are arranged side by side in substantially the same orientation as an axis in the longitudinal direction of the units, or arranged and then twisted or intertwined. On the other hand, the entangled type refers to a shape in which carbon nanotube units are entangled without a predetermined shape such as a bundle or a rope. Between bundled-type carbon nanotubes and entangled-type carbon nanotubes, the bundled-type carbon nanotubes are excellent in terms of dispersibility, but the bundled-type carbon nanotubes have a limitation of having a low bulk density in the powder state, thereby having low productivity in the synthesis process. Therefore, in order to increase the dispersibility of carbon nanotubes, there is a need for research on increasing the bulk density of the carbon nanotubes in the powder state while maintaining the shape thereof as a bundled shape, thereby also increasing productivity.

### Prior Art Document

(Patent Document 1) KR 10-2018-0106929 A

### DISCLOSURE OF THE INVENTION

### TECHNICAL PROBLEM

The purpose of the present invention is to provide carbon nanotubes and a method for preparing the same, wherein the carbon nanotubes have a high bulk density while maintaining a bundled shape, and thus, are excellent in both dispersibility and productivity.

In addition, the present invention is to provide a carbon nanotube dispersion and a positive electrode slurry composition containing the same, wherein the carbon nanotube dispersion has excellent processability due to the low viscosity thereof by containing bundled-type carbon nanotubes, and also exhibits electrical conductivity at a level equal to or higher than that of a carbon nanotube dispersion containing typical entangled-type carbon nanotubes.

### TECHNICAL SOLUTION

In order to achieve the above-described purposes, the present invention provides a carbon nanotube composition, a method for preparing the carbon nanotube composition, a carbon nanotube dispersion, and a positive electrode slurry composition.

More specifically, (1) the present invention provides a carbon nanotube composition having a volume density of 500/mm³ to 2500/mm³ defined by Equation 1 below. Volume density = Yield of carbon nanotubes / Volume of carbon nanotube composition

The yield of carbon nanotubes is calculated by (Mass of carbon nanotube composition - Mass of catalyst in carbon nanotube composition) / (Mass of catalyst in carbon nanotube composition).

(2) In (1) above, the present invention provides a carbon nanotube composition having a particle size density of 50/mm to 120/mm defined by Equation 2 below. Particle size density = Yield of carbon nanotubes / Volume average particle size of carbon nanotubes

The yield of carbon nanotubes is calculated in the same manner as in Equation 1.

(3) In (1) or (2) above, the present invention provides a carbon nanotube composition having a bulk density of 40 kg/m³ to 85 kg/m³.

(4) In any one among (1) to (3) above, the present invention provides a carbon nanotube composition, wherein the yield of carbon nanotubes is 30 or greater.

(5) In any one among (1) to (4) above, the present invention provides a carbon nanotube composition, wherein the specific surface area of the carbon nanotubes is 160 m²/g or greater.

(6) In any one among (1) to (5) above, the present invention provides a carbon nanotube composition, wherein the carbon nanotube composition includes bundled-type carbon nanotubes.

(7) The present invention provides a method for preparing a carbon nanotube composition, the carbon nanotube composition according to any one among (1) to (6) above, wherein the method includes S1 filling a fluidized bed reactor with a supported catalyst in which CO and V are supported on boehmite, and carbon nanotube powder for a fluidized bed, and S2 synthesizing carbon nanotubes by reacting while supplying a carbon source gas into the fluidized bed reactor.

(8) In (7) above, the present invention provides a method for preparing a carbon nanotube composition, wherein the CO content of the supported catalyst is 22 wt%, and the molar ratio between Co and V in the supported catalyst is 2:1 to 4:1.

(9) In (7) or (8) above, the present invention provides a method for preparing a carbon nanotube composition, wherein the step S2 is to perform heating such that the internal temperature of the fluidized bed reactor is to be 650 °C to 750 °C.

(10) In any one among (7) to (9) above, the present invention provides a method for preparing a carbon nanotube composition, wherein the step S2 is to supply the carbon source gas and a flowing gas together, and the supply flow ratio between the carbon source gas and the flowing gas is 1:1 to 1:10.

(11) The present invention provides a carbon nanotube dispersion, the carbon nanotube dispersion including the carbon nanotube composition according to any one among (1) to (6) above and a dispersion medium.

(12) In (11) above, the present invention provides a carbon nanotube dispersion, wherein the content of the carbon nanotube composition in the dispersion is 0.5 wt% to 5 wt%.

(13) In (11) or (12) above, the present invention provides a carbon nanotube dispersion, wherein the dispersion includes one or more dispersants selected from the group consisting of styrene butylene rubber (SBR), carboxymethyl cellulose (CMC), hydrogenated acrylonitrile butatiene rubber (H-NBR), polyvinylpyrrolidone (PVP), and polyvinylbutyral (PVB).

(14) In any one among (11) to (13) above, the present invention provides a carbon nanotube dispersion, wherein the initial viscosity of the carbon nanotube dispersion is 15,000 cP or less.

(15) The present invention provides a positive electrode slurry composition including the carbon nanotube dispersion according to any one among (11) to (14) above, a positive electrode active material, a binder, and a solvent.

### ADVANTAGEOUS EFFECTS

A carbon nanotube composition of the present invention has a high bulk density while maintaining a bundled shape, and thus, is excellent in both dispersibility and productivity.

In addition, a carbon nanotube dispersion of the present invention has excellent processability due to the low viscosity thereof, and may contain a relatively high content of carbon nanotubes, and thus, is easily processed in the preparation of a positive electrode slurry and may maintain excellent electrical properties.

### BRIEF DESCRIPTION OF THE DRAWINGS

FIG. 1 shows the morphology of carbon nanotubes of Example 1 observed using an SEM image at x3000 magnification.
FIG. 2 shows the morphology of carbon nanotubes of Comparative Example 3 observed using an SEM image at x3000 magnification.
FIG. 3 shows the morphology of carbon nanotubes of Comparative Example 4 observed using an SEM image at x3000 magnification.
FIG. 4 shows the morphology of carbon nanotubes of Example 8 observed using an SEM image at x400 magnification.
FIG. 5 shows the morphology of carbon nanotubes of Example 9 observed using an SEM image at x400 magnification.
FIG. 6 shows the morphology of carbon nanotubes of Example 10 observed using an SEM image at x400 magnification.
FIG. 7 shows the morphology of carbon nanotubes of Example 11 observed using an SEM image at x400 magnification.

### MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

The term 'carbon nanotube' used in the present invention refers to a secondary structure in which carbon nanotube units are assembled to form a bundle in whole or in part, and the carbon nanotube unit has a graphite surface in a cylindrical shape of a nano-sized diameter, and has a sp2 bonding structure. At this time, depending on the angle and structure in which the graphite sheet is rolled, conductor properties or semiconductor properties may be exhibited. Depending on the number of bonds forming a wall, a carbon nanotube unit may be classified into a single-walled carbon nanotube (SWCNT), a double-walled carbon nanotube (DWCNT), and a multi-walled carbon nanotube (MWCNT), and the thinner the wall, the lower the resistance.

A carbon nanotube of the present invention may include one or two or more of a single-walled carbon nanotube unit, a double-walled carbon nanotube unit, and a multi-walled carbon nanotube unit.

In the present invention, a bundled-type carbon nanotube refers to a carbon nanotube having a secondary shape in the form of a bundle or a rope in which a plurality of carbon nanotube units are arranged side by side in substantially the same orientation as an axis in the longitudinal direction of the units, or arranged and then twisted or intertwined.

In the present invention, an entangled-type carbon nanotube refers to a carbon nanotube having a shape in which carbon nanotube units are entangled without a predetermined shape such as a bundle or a rope.

In the present invention, a carbon nanotube composition refers to a product obtained from a process of preparing carbon nanotubes by using a fluidized bed reactor, and refers to a mixture including synthesized carbon nanotubes and a supported catalyst used in the synthesis. More specifically, the carbon nanotube composition includes a supported catalyst and carbon nanotubes grown from the supported catalyst.

### Carbon nanotube composition

As is known, bundled-type carbon nanotubes have excellent dispersibility, and thus, have an advantage of having excellent electrical properties, but have a relatively small content of carbon nanotubes included per unit volume, and thus, have a disadvantage of having a small content of carbon nanotubes obtained per one batch of production process. Therefore, if it is possible to obtain carbon nanotubes having carbon nanotube strands present in a more dense form while maintaining a bundled secondary shape, it is possible to provide carbon nanotubes which are excellent in terms of both performance and productivity.

In order to achieve the above-described purpose, the present invention provides a carbon nanotube composition having a volume density of 500/mm³ to 2500/mm³ defined by Equation 1 below. Volume density = Yield of carbon nanotubes / Volume of carbon nanotube composition

The yield of carbon nanotubes is calculated by (Mass of carbon nanotube composition - Mass of catalyst in carbon nanotube composition) / (Mass of catalyst in carbon nanotube composition).

The volume density is an indicator showing how many carbon nanotubes are included per unit volume based on a carbon nanotube composition obtained after a synthesis reaction is completed. Particularly, since the volume density is also affected by the yield of carbon nanotubes, if the yield of the carbon nanotubes is above a certain level and the volume of the carbon nanotube composition is within a specific range, a volume density in the above-described range may be obtained.

The volume density may be from 500/mm³ to 2500/mm³, preferably 500/mm³ or greater, 510/mm³ or greater, 520/mm³ or greater, 530/mm³ or greater, or 540/mm³, but 2500/mm³ or less, 2400/mm³ or less, 2300/mm³ or less, 2200/mm³ or less, 2100/mm³ or less, 2000/mm³ or less, 1900/mm³ or less, 1850/mm³ or less, 1800/mm³ or less, or 1780/mm³ or less. If the volume density exceeds the above-described range, the secondary shape of the carbon nanotubes will be changed from a bundled shape to an entangled shape, which may reduce the electrochemical performance of the carbon nanotubes themselves.

In the carbon nanotube composition provided by the present invention, the carbon nanotube composition may have a particle size density of 50/mm to 120/mm defined by Equation 2 below. Particle size density = Yield of carbon nanotubes / Volume average particle size of carbon nanotubes

The yield of carbon nanotubes is calculated in the same manner as in Equation 1.

Similar to the volume density, the particle size density is an indicator showing how many carbon nanotubes are included in a composition based on the volume average particle size of the carbon nanotubes, and is also an indicator related to the density of carbon nanotubes, like the volume density.

The particle size density may be 50/mm to 120/mm, preferably 50/mm or greater, 53/mm or greater, 55/mm or greater, 57/mm or greater, 60/mm or greater, 62/mm or greater, 64/mm or greater, or 66/mm or greater, but 120/mm or less, 118/mm or less, 115/m or less, 113/mm or less, 110/mm or less, 107/mm or less, 105/mm or less, or 102/mm or less. In the same manner, if the particle size density exceeds the above-described range, the secondary shape of the carbon nanotubes will be changed from a bundled shape to an entangled shape, which may reduce the electrochemical performance of the carbon nanotubes themselves.

In the carbon nanotube composition provided by the present invention, the bulk density may be 40 kg/m³ to 85 kg/m³, preferably 40 kg/m³ or greater, 45 kg/m³ or greater, 50 kg/m³ or greater, 55 kg/m³ or greater, or 57 kg/m³ or greater, but 80 kg/m³ or less, 77 kg/m³ or less, or 75 kg/m³ or less. The bulk density value of the carbon nanotube composition of the present invention is higher than that of typical bundled-type carbon nanotubes, which means that the carbon nanotube content per unit volume of the carbon nanotube composition of the present invention is high, and accordingly, the productivity per batch is high. Meanwhile, the bulk density may be calculated by filling a 50 ml container with a carbon nanotube composition by free fall, measuring the weight of carbon nanotubes in the container, and then dividing the corresponding weight by 50 ml, the volume of the container.

In the carbon nanotube composition provided by the present invention, the yield of the carbon nanotubes may be 23 or greater, preferably 23 or greater, 23.5 or greater, or 24 or greater, but 45 or less, 43 or less, or 40 or less. The yield is an indicator meaning how many carbon nanotubes are obtained with respect to the mass of a catalyst, and if the yield is within the above-described range, it means that the carbon nanotube composition of the present invention has been obtained at a high yield from a supported catalyst. That is, the carbon nanotube composition of the present invention has excellent productivity similar to that of typical entangled-type carbon nanotubes. Meanwhile, the yield of carbon nanotubes may be calculated by (Mass of carbon nanotube composition - Mass of catalyst in carbon nanotube composition) / (Mass of catalyst in carbon nanotube composition). More specifically, the mass of a catalyst in the carbon nanotube composition may be a value obtained by oxidizing the carbon nanotube composition in an alumina crucible under 750 °C and atmospheric conditions for 4 hours to combust all carbon nanotubes, thereby leaving only the supported catalyst in the composition, and then measuring the weight of the remaining supported catalyst.

In the carbon nanotube composition provided by the present invention, the specific surface area of carbon nanotubes may be 160 m²/g or greater, preferably 163 m²/g or greater, 165 m²/g or greater, or 168 m²/g or greater, but 220 m²/g or less, 210 m²/g or less, or 205 m²/g or less. The above-described specific surface area range is similar to a specific surface area value of typical bundled-type carbon nanotubes, and as described above, the carbon nanotube composition of the present invention has a bulk density similar to that of entangled-type carbon nanotubes, thereby exhibiting high productivity, while being similar to the typical bundled-type carbon nanotubes in terms of specific surface area, and thus, can be confirmed to be more excellent in terms of dispersibility and electrical conductivity.

The carbon nanotube composition provided by the present invention may include bundled-type carbon nanotubes, and more specifically, carbon nanotubes in the composition may all be bundled-type carbon nanotubes. As described above, the carbon nanotubes in the carbon nanotube composition of the present invention are of a bundled-type and have technical advantages of entangled-type carbon nanotubes, and may have a content of the bundled-type carbon nanotubes in the composition as high as the above-described range.

### Method for preparing carbon nanotube composition

The present invention provides a method for preparing the above-described carbon nanotube composition. Specifically, the present invention provides a method for preparing a carbon nanotube composition, the method including S1 filling a fluidized bed reactor with a supported catalyst in which Co and V are supported on boehmite, and carbon nanotube powder for a fluidized bed, and S2 synthesizing carbon nanotubes by reacting while supplying a carbon source gas into the fluidized bed reactor.

### 1) Step S1

### Catalyst

A catalyst used in the method for preparing a carbon nanotube composition of the present invention uses a bohemite support, and is characterized in that Co and V are simultaneously supported on the support. Bohemite is an aluminum-based support represented by γ-AlO(OH), and allows Co, the main catalyst component, and V, the co-catalyst component, to be uniformly supported on the surface through a hydroxyl group.

Meanwhile, the number average particle size of the bohemite may be from 20 µm to 100 µm, preferably 40 µm to 60 µm. If the number average particle size of the bohemite is in the above-described range, Co and V may be efficiently supported, and the specific surface area of carbon nanotubes prepared from the catalyst may be exhibited to be particularly high.

In addition, the bohemite may have a specific surface area of 150 m²/g to 250 m²/g, preferably 170 m²/g to 220 m²/g. The bohemite may have a bulk density of 500 kg/m³ to 1200 kg/m³, preferably from 700 kg/m³ to 1000 kg/m³. If the physical properties of the bohemite are in the above-described ranges, there is a technical advantage in that the durability of the support may be excellent, and a large amount of metal components may be supported without any difficulty.

The shape of the bohemite is not particularly limited, but may be spherical or potato-shaped. In addition, the bohemite may have a porous structure, a molecular sieve structure, a honeycomb structure, and the like to have a relatively high surface area per unit mass or unit volume.

In the catalyst used in the method for preparing a carbon nanotube composition of the present invention, Co is the main catalyst component, and serves to facilitate a carbon nanotube synthesis reaction by directly lowering the activation energy of the reaction in which carbon nanotubes are synthesized from a carbon source gas. Particularly, when Co is used as the main catalyst component instead of Ni or Fe, it is easy to develop the activity of a grain region of the main catalyst component on a support, so that there is a technical advantage in that it is easier to form a bundle structure of carbon nanotubes compared to using Ni or Fe as the main catalyst component. In addition, when a catalyst in which Co is supported on bohemite is used, it is possible to prepare carbon nanotubes at a higher yield than using a catalyst in which Ni or Fe is supported on bohemite. Meanwhile, V is the co-catalyst component and serves to further increase catalytic activity of the Co, and V is particularly excellent in synergistic effect with Co, and thus, may suppress Co aggregation in the preparation process.

Meanwhile, in the supported catalyst, the content of Co in the supported catalyst may be 16 wt% to 22 wt%, preferably 18 wt% to 20 wt%. In addition, the molar ratio between Co and V in the supported catalyst may be 2:1 to 4:1, preferably 2.5:1 to 3.5:1. If the content conditions of Co and V components included in a supported catalyst are within the above-described ranges, a carbon nanotube composition having a desired volume density of the present invention may be prepared.

The catalyst may be prepared by adding the above-described bohemite support to a solution containing a Co precursor and a V precursor, followed by drying and firing. The firing temperature in the catalyst preparation process may be 660 °C or higher and 740 °C or lower, preferably 660 °C or higher or 670 °C or higher, but 740 °C or lower, 730 °C or lower, or 720 °C or lower. If the firing temperature in the catalyst preparation process is not suitable, the particle size density and volume density of carbon nanotubes obtained from an obtained catalyst may be out of the ranges required in the present invention.

### Carbon nanotube powder for fluidized bed

In the method for preparing a carbon nanotube composition of the present invention, carbon nanotube powder for a fluidized bed is introduced together with the above-described catalyst into a fluidized bed reactor. The carbon nanotube powder for a fluidized bed is carbon nanotube powder synthesized in advance that is introduced together with a catalyst, and is introduced for the purpose of securing a reaction temperature in the fluidized bed reactor. Specifically, if only a supported catalyst is introduced without the above-described carbon nanotube powder, 1) when a sufficient amount of the supported catalyst is introduced, carbon nanotubes are overgrown from each catalyst, resulting in preparing carbon nanotubes having a volume greater than the internal volume of the fluidized bed reactor, so that carbon nanotubes having uniform physical properties may not be prepared, and in order to prevent such a phenomenon, 2) when a small amount of the supported catalyst is introduced, the volume occupied by the supported catalyst in the internal space of the fluidized bed reactor is small, so that the supported catalyst may not be heated to a sufficiently high temperature during a reaction process. On the other hand, if the supported catalyst and the carbon nanotube powder for a fluidized bed are introduced together into a fluidized bed reactor to be used for the formation of a fluidized bed, the two components occupy more than a certain percentage of the internal space of the fluidized bed reactor, so that a sufficient reaction temperature may be secured, and after the completion of the reaction, a final product may be easily obtained without the need to separately separate the carbon nanotube powder for a fluidized bed introduced to form the fluidized bed.

Carbon nanotubes used as the carbon nanotube powder for a fluidized bed are not particularly limited. However, from the perspective of obtaining a more uniform carbon nanotube composition, it may be preferable that carbon nanotubes, which are similar in properties such as a bulk density, a specific surface area, and a particle size to carbon nanotubes to be prepared, are used as the carbon nanotube powder for a fluidized bed.

### 2) Step S2

After filling the fluidized bed reactor with the supported catalyst and the carbon nanotube powder for a fluidized bed in the previous step, a carbon source gas may be injected into the fluidized bed reactor to synthesize carbon nanotubes.

The carbon source gas is a carbon-containing gas which may be decomposed at a high temperature to form carbon nanotubes, and specific examples thereof may include various carbon-containing compounds such as aliphatic alkanes, aliphatic alkenes, aliphatic alkynes, aromatic compounds, and the like, and more specifically, a compound of methane, ethane, ethylene, acetylene, ethanol, methanol, acetone, carbon monoxide, propane, butane, benzene, cyclohexane, propylene, butene, isobutene, toluene, xylene, cumene, ethylbenzene, naphthalene, phenanthrene, anthracene, acetylene, formaldehyde, acetaldehyde, and the like may be used. Particularly preferably, the carbon source gas may be ethylene.

While injecting the carbon source gas into the fluidized bed reactor, the internal temperature of the fluidized bed reactor may be raised to decompose the carbon source gas and synthesize carbon nanotubes. It may be preferable that the internal temperature of the fluidized bed reactor in the present step is 650 °C to 750 °C, particularly preferably 670 °C to 730 °C. The carbon nanotube composition of the present invention may be prepared only if the above-described supported catalyst is used, and at the same time, the reaction temperature is controlled to be within the above-described range. If the reaction temperature is lower than the above-described range, the yield of the carbon nanotube composition may be too low, and if higher than the same, there may be a problem in that synthesized carbon nanotubes are decomposed again.

Meanwhile, in the present step, a flowing gas may be supplied together with the carbon source gas into the fluidized bed reactor. The flowing gas is to further increase the fluidity of pre-introduced catalyst particles and the carbon nanotube powder for a fluidized bed, and a gas having high thermal stability may be used without reacting with the carbon source gas or carbon nanotubes. For example, nitrogen gas or an inert gas may be used as the flowing gas.

The supply flow ratio between the carbon source gas and the flowing gas may be 1:1 to 1:10 based on volume, preferably 1:2 to 1:8. When the supply flow ratio between the two gases is within the above-described range, the carbon nanotube composition may be obtained at a high yield.

### Carbon nanotube dispersion

The present invention provides a carbon nanotube dispersion containing the above-described carbon nanotube composition. More specifically, the present invention provides a carbon nanotube dispersion containing the above-described carbon nanotube composition and a dispersion medium.

### Dispersion medium

In the carbon nanotube dispersion of the present invention, both an aqueous solvent and an organic solvent may be used as the dispersion medium, and for example, water; an amide-based polar organic solvent such as dimethylformamide (DMF), diethylformamide, dimethylacetamide (DMAc) and N-methylpyrrolidone (NMP); an alcohol such as methanol, ethanol, 1-propanol, 2-propanol (isopropyl alcohol), 1-butanol (n-butanol), 2-methyl-1-propanol (isobutanol), 2-butanol (sec-butanol), 1-methyl-2-propanol (tert-butanol), pentanol, hexanol, heptanol and octanol; a glycol such as ethylene glycol, diethylene glycol, triethylene glycol, propylene glycol, 1,3-propanediol, 1,3-butanediol, 1,5-pentanediol, and hexylene glycol; a polyhydric alcohol such as glycerin, trimethylol propane, pentaerythritol, and sorbitol; a glycol ether such as ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether; a ketone such acetone, methyl ethyl ketone, methyl propyl ketone, and cyclopentanone; an ester such as ethyl acetate, γ-butyl lactone, and ε-propiactone, and any one thereof or a mixture of two or more thereof may be used. More specifically, when considering the effect of improving dispersibility for the carbon nanotubes and a dispersant, the dispersion medium may be an amide-based polar organic solvent, particularly N-methyl pyrrolidone.

The carbon nanotube dispersion of the present invention may further contain a dispersant to further increase the dispersibility. As the dispersant, an aqueous dispersant or an organic dispersant may be used, and the aqueous dispersant may be selected from, for example, styrene butylene rubber (SBR) or carboxymethyl cellulose (CMC), and the organic dispersant may be, for example, hydrogenated acrylonitrile butadiene rubber (H-NBR), polyvinylpyrrolidone (PVP), or polyvinyl butyral (PVB).

In the carbon nanotube dispersion of the present invention, the initial viscosity of the dispersion may be 15,000 cP or less, or preferably, may be 12,000 cP or less, 10,000 cP or less, 8,000 cP or less, 7,000 cP or less, 6,000 cP or less, 5,000 cP or less, 4,500 cP or less, 4,000 cP or less, or 3,500 cP or less, but 200 cP or greater, 500 cP or greater, 700 cP or greater, 1,000 cP or greater, 1,200 cP or greater, or 1,400 cP or greater. By including the above-described carbon nanotube composition, the dispersion of the present invention may maintain a relatively low viscosity as above. Meanwhile, the viscosity may be measured using a viscometer, and specifically, may be measured under the conditions of a spindle rotation of 12 rpm and a measurement temperature of 20 °C to 25 °C.

In the carbon nanotube dispersion of the present invention, the content of the carbon nanotube composition in the dispersion may be 0.5 wt% to 5 wt%, preferably from 1 wt% to 5 wt%. In carbon nanotube dispersion, the viscosity of the dispersion increases as the content of carbon nanotubes increases, so that a suitable amount of carbon nanotubes needs to be included for smooth processing of the dispersion. If the content of carbon nanotubes in the dispersion is less than the above-described range, electrical conductivity may decrease when a slurry is applied later, and if the content of carbon nanotubes is greater than the above-described range, dispersion viscosity may be increased excessively, so that processing may not be smooth.

In the carbon nanotube dispersion of the present invention, the volume average particle size (Mv) of carbon nanotube particles dispersed in the dispersion may be 3 µm or greater, 4 µm or greater, 5 µm or greater, 6 µm or greater, 6.5 µm, or 7 µm or greater, but 30 µm or less, 25 µm or less, 20 µm or less, 18 µm or less, 15 µm or less, or 13 µm or less. In addition, the D10 value of the carbon nanotube particles may be 1.8 µm or greater, 2.0 µm or greater, 2.2 µm or greater, 2.4 µm or greater, 2.5 µm or greater, 2.6 µm or greater, or 2.7 µm or greater, but 10 µm or less, 9 µm or less, 8 µm or less, 7 µm or less, 6 µm or less, 5 µm or less, or 4.5 µm or less. In addition, the D50 value of the carbon nanotube particles may be 2.5 µm or greater, 3 µm or greater, 4 µm or greater, 4.5 µm or greater, or 5 µm or greater, but 15 µm or less, 14 µm or less, 13 µm or less, 12 µm or less, 11 µm or less, 10 µm or less, or 9 µm or less. In addition, the D90 value of the carbon nanotube particles may be 8 µm or greater, 9 µm or greater, 10 µm or greater, 11 µm or greater, 12 µm or greater, or 13 µm or greater, but 30 µm or less, 29 µm or less, 28 µm or less, 27 µm or less, 26 µm or less, or 25 µm or less. In addition, a span ((D90-D10)/D50) value obtained from the particle size distribution of the carbon nanotube particles may be 1.6 or greater, 1.65 or greater, 1.7 or greater, 1.75 or greater, or 1.78 or greater, but 3.0 or less, 2.7 or less, 2.5 or less, 2.4 or less, or 2.3 or less. If the span value in the particle size distribution obtained for the carbon nanotube particles dispersed in the dispersion is in the above-described range, there are advantages in that the viscosity of the dispersion is low and the electrical conductivity is excellent.

The above-described carbon nanotube dispersion may be prepared by mixing the carbon nanotube composition with the dispersion medium. In the process of preparing the carbon nanotube dispersion, a pre-treatment step S0 of milling the carbon nanotube composition may be performed before the mixing. By milling the carbon nanotube composition in advance and then mixing the same with the dispersion medium, it is possible to further decrease the viscosity in the dispersion state. The milling may be performed by a typical method known as a milling method, which may be, for example, ball milling. The time during which the milling is performed is also not particularly limited, but due to the fact that the structure of carbon nanotubes themselves may collapse if the milling is performed excessively, it is preferable that the milling is performed for 10 hours or less.

In addition, the mixing process may be performed in a high-pressure homogenizer. Through the mixing in the high-pressure homogenizer, it is possible to prepare a uniform dispersion in a short period of time. The mixing in the high-pressure homogenizer may be performed for one time, or may be performed repeatedly for two times or five times, and the viscosity in the dispersion state may decrease as the number of repetitions increases. Since it is important that the viscosity of the dispersion is within a suitable range at the time of slurry application, the number of times for which the mixing is repeated in the high-pressure homogenizer may be determined depending on a required dispersion viscosity value before the mixing is performed.

### Positive electrode slurry

The present invention provides a positive electrode slurry containing the above-described carbon nanotube dispersion. The carbon nanotube dispersion has a suitable viscosity and excellent electrical conductivity, and thus, is particularly suitable to be used as a conductive material, and accordingly, the dispersion, a positive electrode active material, a binder, and a solvent may be mixed to be used as a positive electrode slurry.

The positive electrode active material, the binder, and the solvent used in the positive electrode slurry of the present invention may be used without particular limitation in the present invention as long as they are commonly used.

Hereinafter, the present invention will be described in more detail with reference to Examples and Experimental Examples, but the present invention is not limited by these Examples and Experimental Examples. Examples according to the present invention may be modified into other various forms, and the scope of the present invention should not be construed as being limited to Examples described below. Examples of the present invention are provided to more fully describe the present invention to those skilled in the art.

### Catalyst Preparation Example 1-1

109.4 g of Co(NO₃)₂·6H₂O and 14.6 g of NH₄VO₃ were dissolved in 146 g of water, and 10.5 g of anhydrous citric acid was dissolved theretogetherwith as a multi-carboxylic acid to prepare a catalyst composition. The catalyst composition was sufficiently stirred, and then was introduced into bohemite, which was a support. Thereafter, the mixture was dried at 170 °C for 6 hours using an oven, and then fired at 690 °C for 1 hour to obtain a catalyst. The content of Co in the catalyst obtained in Example 1 was 19 wt%, and the molar ratio between Co and V was 3:1.

### Catalyst Preparation Examples 1-2 to 1-9

Based on the weight of the cobalt and vanadium precursors used in Catalyst Preparation Example 1-1, which was set to 100% of supported amount, the supported amount and the temperature of the catalyst firing were changed as shown in Table 1 below to obtain a catalyst.

**[Table 1]**

| | Supported amount (%) | Firing temperature (°C) |
|---|---|---|
| Catalyst Preparation Example 1-1 | 100% | 690 |
| Catalyst Preparation Example 1-2 | 65% | 690 |
| Catalyst Preparation Example 1-3 | 80% | 690 |
| Catalyst Preparation Example 1-4 | 120% | 690 |
| Catalyst Preparation Example 1-5 | 135% | 690 |
| Catalyst Preparation Example 1-6 | 100% | 650 |
| Catalyst Preparation Example 1-7 | 100% | 670 |
| Catalyst Preparation Example 1-8 | 100% | 720 |
| Catalyst Preparation Example 1-9 | 100% | 750 |

### Catalyst Preparation Example 2

58.9 g of Co(NO₃)₂·6H₂O and 2.4 g of NH₄VO₃ were dissolved in 78.8 g of water, and 2.4 g of anhydrous citric acid was dissolved theretogetherwith as a multi-carboxylic acid to prepare a catalyst composition. The catalyst composition was sufficiently stirred, and then was introduced into bohemite, which was a support. Thereafter, the mixture was dried at 190 °C for 6 hours using an oven, and then fired at 690 °C for 1 hour to obtain a catalyst. The content of Co in the catalyst obtained in Example 1 was 13 wt%, and the molar ratio between Co and V was 10:1.

### Examples and Comparative Examples

800 g of the catalyst prepared in each of Catalyst Preparation Examples and a pre-synthesized carbon nanotube composition were introduced into a fluidized bed reactor, and heating was performed such that the internal temperature of the fluidized bed reactor was to be a predetermined temperature while injecting an ethylene gas and a nitrogen gas into the fluidized bed reactor. The reaction was continued for 100 minutes to obtain a carbon nanotube composition including carbon nanotubes synthesized with the catalyst.

The type of the catalyst used in each of Examples and Comparative Examples, the weight of the pre-synthesized carbon nanotube composition (bed) introduced into the fluidized bed reactor in advance, the flow ratio (based on volume) between the ethylene gas and the nitrogen gas, and the reaction temperature are summarized and shown in Table 2 below.

**[Table 2]**

| | Catalyst | Bed weight (kg) | Nitrogen:ethy lene ratio | Reaction temperature (°C) |
|---|---|---|---|---|
| Example 1 | Catalyst Preparation Example 1-1 | 11.6 | 2:1 | 710 |
| Example 2 | Catalyst Preparation Example 1-2 | 11.6 | 2:1 | 710 |
| Example 3 | Catalyst Preparation Example 1-3 | 11.6 | 2:1 | 710 |
| Example 4 | Catalyst Preparation Example 1-4 | 11.6 | 2:1 | 710 |
| Example 5 | Catalyst Preparation Example 1-5 | 11.6 | 2:1 | 710 |
| Comparati ve Example 1 | Catalyst Preparation Example 1-6 | 11.6 | 2:1 | 710 |
| Example 6 | Catalyst Preparation Example 1-7 | 11.6 | 2:1 | 710 |
| Example 7 | Catalyst Preparation Example 1-8 | 11.6 | 2:1 | 710 |
| Comparati ve Example 2 | Catalyst Preparation Example 1-9 | 11.6 | 2:1 | 710 |
| Comparati ve Example 3 | Catalyst Preparation Example 2 | 11.6 | 2:1 | 710 |
| Example 8 | Catalyst Preparation Example 1-1 | 11.6 | 2:1 | 670 |
| Example 9 | Catalyst Preparation Example 1-1 | 11.6 | 2:1 | 690 |
| Example 10 | Catalyst Preparation Example 1-1 | 11.6 | 2:1 | 710 |
| Example 11 | Catalyst Preparation Example 1-1 | 11.6 | 2:1 | 730 |
| Example 12 | Catalyst Preparation Example 1-1 | 11.6 | 1:1 | 710 |
| Example 13 | Catalyst Preparation Example 1-1 | 11.6 | 1.5:1 | 710 |
| Example 14 | Catalyst Preparation Example 1-1 | 11.6 | 2:1 | 710 |
| Example 15 | Catalyst Preparation Example 1-1 | 11.6 | 2.5:1 | 710 |
| Example 16 | Catalyst Preparation Example 1-1 | 18 | 2:1 | 710 |
| Example 17 | Catalyst Preparation Example 1-1 | 15 | 2:1 | 710 |

### Comparative Example 4

A product of CNano Co., FT9100, which is an entangled-type carbon nanotube, was used.

### Comparative Example 5

An entangled-type carbon nanotube composition having a bulk density of 123.7 kg/m³, a specific surface area of 194 m²/g, a purity of 97.5%, and a yield of 39.2 times was used.

### Experimental Example 1. Confirmation of properties of carbon nanotube compositions of Examples and Comparative Examples

The following properties were confirmed for the carbon nanotube composition obtained in each of Examples and Comparative Examples.
1) Bulk density: A 50 ml container was filled with the obtained carbon nanotube composition by free fall, and then the weight of the carbon nanotube composition in the container was measured. The measured weight was divided by 50 ml, the volume of the container, to calculate the bulk density.
2) Specific surface area: The specific surface area was measured by a standard measurement method using Trista 2000 of Microtrac Co.
3) Purity: The weight of the obtained carbon nanotube composition was measured, and the obtained carbon nanotube composition was introduced into an alumina crucible and oxidized for 4 hours under atmospheric conditions at 750 °C before measuring the weight of the remaining ash (catalyst). From the above, the weight of the oxidized carbon nanotubes and the weight of the residual catalyst were obtained, and the purity was calculated using the following equation.
   Purity (wt%) = (Mass of carbon nanotube composition - Mass of catalyst in carbon nanotube composition) / (Mass of carbon nanotube composition) * 100%
4) Yield: The weight of the obtained carbon nanotube composition was measured, and the obtained carbon nanotube composition was introduced into an alumina crucible and oxidized for 4 hours under atmospheric conditions at 750 °C before measuring the weight of the remaining ash (catalyst). In addition, the yield was calculated using the following equation.
   Yield = (Mass of carbon nanotube composition - Mass of catalyst in carbon nanotube composition) / (Mass of catalyst in carbon nanotube composition)
5) Mv (Volume average particle size, µm): 0.1 g of the carbon nanotube composition was dispersed in 50 g of water, and then the particle size distribution and volume average particle size were measured using a spectrometer.
6) Volume density: The volume density was calculated through Equation 1 below.
   Volume density = Yield of carbon nanotubes / Volume of carbon nanotube composition
7) Particle size density: The particle size density was calculated through Equation 2 below. Particle size density = Yield of carbon nanotubes / Volume average particle size of carbon nanotubes

The measurement and calculation results are summarized in Table 3 below.

**[Table 3]**

| | Bulk density (kg/m³) | Specifi c surface area (m²/g) | Purity (%) | Yield | Mv (µm) | Volume density (mm⁻³) | Particl e size density (mm⁻¹) |
|---|---|---|---|---|---|---|---|
| Example 1 | 69.7 | 183.6 | 97.0 | 32.3 | 355.7 | 1373 | 90.9 |
| Example 2 | 57.8 | 190.5 | 97.5 | 39.0 | 512.2 | 555 | 76.1 |
| Example 3 | 66.0 | 188.8 | 97.5 | 39.0 | 494.3 | 617 | 78.9 |
| Example 4 | 72.5 | 179.9 | 96.6 | 28.4 | 342.8 | 1348 | 82.9 |
| Example 5 | 74.3 | 179.2 | 97 | 32.3 | 337.5 | 1607 | 95.8 |
| Example 6 | 61.6 | 181.7 | 97.3 | 36.0 | 475.4 | 641 | 75.8 |
| Example 7 | 75.2 | 175.7 | 96.1 | 24.6 | 298.2 | 1776 | 82.6 |
| Example 8 | 66.2 | 202.2 | 97.0 | 32.3 | 483.9 | 545 | 66.8 |
| Example 9 | 69.9 | 191.4 | 97.11 | 33.6 | 449.4 | 707 | 74.8 |
| Example 10 | 70.5 | 179.7 | 97.06 | 33.0 | 365.7 | 1290 | 90.3 |
| Example 11 | 74.8 | 168.6 | 97.16 | 34.2 | 340.5 | 1656 | 100.5 |
| Example 12 | 69.1 | 185.8 | 96.8 | 30.3 | 445.1 | 656 | 68.0 |
| Example 13 | 65.1 | 173.35 | 96.89 | 31.2 | 466.5 | 586 | 66.8 |
| Example 14 | 68.4 | 173.3 | 96.88 | 31.1 | 438.2 | 705 | 70.9 |
| Example 15 | 70.5 | 172.1 | 96.96 | 31.9 | 438.6 | 722 | 72.7 |
| Example 16 | 74.1 | 180.5 | 97.1 | 33.5 | 475.9 | 594 | 70.4 |
| Example 17 | 72.1 | 179.5 | 97.2 | 34.7 | 462.7 | 670 | 75.0 |
| Compara tive Example 1 | 51.1 | 187.5 | 97.1 | 33.5 | 632.7 | 253 | 52.9 |
| Compara tive Example 2 | 50.3 | 146.2 | 87.7 | 7.1 | 165.3 | 3016 | 43.1 |
| Compara tive Example 3 | 37.5 | 185.0 | 95.7 | 21.5 | 436.0 | 496 | 49.3 |
| Compara tive Example 4 | 114.2 | 210 | 97.9 | 46.0 | 60.0 | 406936 | 766.7 |
| Compara tive Example 5 | 123.7 | 194.0 | 97.5 | 39.2 | 296.3 | 2879 | 132.3 |

As can be confirmed in Table 3 above, the carbon nanotube composition of the present invention according to each Example has a higher yield and bulk density than the carbon nanotube composition according to each of Comparative Examples 2 and 3. Comparative Example 2 is a bundled-type carbon nanotube composition prepared using a catalyst fired at a higher temperature, and Comparative Example 3 is also a typical bundled-type carbon nanotube composition, and it means that the carbon nanotube composition of the present invention contains more carbon nanotubes per unit volume than the typical bundled-type carbon nanotube composition, and accordingly, may be obtained with high productivity.

Meanwhile, Examples and Comparative Example 3 exhibited similar levels of specific surface area and volume average particle size. From the above, it has been confirmed that the carbon nanotube composition of the present invention may be obtained with higher productivity than Comparative Example 3, while having carbon nanotubes with physical properties similar to those of typical bundled-type carbon nanotubes, and from the results, it can be predicted that the carbon nanotube composition of the present invention may exhibit a similar level of electrical conductivity as a typical bundled-type carbon nanotube composition.

Meanwhile, in the results of Table 2 above, Examples 1 and 10 used catalysts prepared under the same conditions, and some differences in the numerical values of Examples 1 and 10 are due to errors in the catalyst synthesis and carbon nanotube synthesis processes.

### Experimental Example 2. Confirmation of properties of carbon nanotube compositions of Examples and Comparative Examples in dispersion state

Using the carbon nanotube compositions of Examples 8 to 11 and the carbon nanotube compositions of Comparative Examples 3 to 5, which used the same catalyst but had different synthesis temperatures, carbon nanotube dispersions were prepared. Specifically, each of the carbon nanotube compositions was milled under the condition of a rotational speed of 175 rpm using a zirconium ball having a diameter of 10 mm. 18 g of the milled carbon nanotube composition was mixed with 578.5 g of N-methylpyrrolidone, and 3.5 g of HNBR was added theretogetherwith as a dispersant to prepare a carbon nanotube dispersion having a carbon nanotube content of 3 wt%.

For the prepared dispersion, the viscosity, slurry powder resistance, and particle size distribution in the dispersion state were measured. Each of the properties was measured in the following manner.
1) Viscosity: The viscosity was measured under the conditions of a spindle rotation of 12 rpm and a measurement temperature of 20±1 °C using a viscometer.
2) Slurry powder resistance: 19 g of the prepared dispersion was mixed with 74 g of an NCM positive electrode material (chemical formula: LiNi_{0.5}Co_{0.2}Mn_{0.3}), 1 g of PVDF as a binder, and 32 g of 1-methyl-2-pyrrolidone as a solvent, and the mixture was stirred to prepare a slurry. Thereafter, the prepared slurry was coated on an aluminum plate, and then dried at 130 °C in a convection oven to form an electrode layer. The electrode layer was peeled off, and then was collected in the form of particles, and a certain amount thereof was introduced into a powder resistance measurement module (Nittoseiko Analytech Co., MCP-PD51). The powder resistance was measured while increasing the pressure inside the module to 4 kN to 20 kN, and a powder resistance value under the condition of a density of 2.7 g/cc was derived.
3) Particle size distribution in dispersion state (Mv, D10, D50, D90, SPAN((D90-D10)/D50): A diluted solution of the carbon nanotube dispersion was introduced using a laser diffraction particle size analyzer (Malvern Paanalytic, Mastersizer 3000), and then the particle size and distribution were analyzed. The volume average particle size (Mv) and D10, D50, and D90 values were derived from the analysis values, and SPAN values were calculated using the derived D10, D50, and D90 values.

The results are summarized in Table 4 below.

**[Table 4]**

| | Viscosit y (cP) | Powder resistance (Ω ·cm) | Mv (µm) | D10 (µm ) | D50 (µm ) | D90 (µm ) | SPAN |
|---|---|---|---|---|---|---|---|
| Example 8 | 3417.0 | 11.7 | 12.68 | 4.02 | 8.86 | 24.41 | 2.30 |
| Example 9 | 2417.0 | 17.6 | 10.76 | 3.87 | 8.31 | 20.31 | 1. 98 |
| Example 10 | 1903.0 | 25.8 | 9.42 | 3.39 | 7.81 | 17.42 | 1.80 |
| Example 11 | 1433.0 | 46.1 | 7.43 | 2.75 | 5.43 | 13.63 | 2.00 |
| Comparat ive Example 3 | 15487 | 12.9 | 8.23 | 3.23 | 6.42 | 13.3 | 1.57 |
| Comparat ive Example 4 | 43 | 397.7 | 2.54 | 1.57 | 2.06 | 7.86 | 3.05 |
| Comparat ive Example 5 | 187 | 150.3 | 2.87 | 0.79 | 2.23 | 5.92 | 2.30 |

As can be confirmed from the results of Table 4 above, the carbon nanotube composition dispersion of the present invention contains bundled-types carbon nanotubes, and thus, exhibits a similar level of electrical conductivity as Comparative Example 3, which also contains bundled-type carbon nanotubes, but has a significantly lower viscosity in the dispersion state than the dispersion of Comparative Example 3, and thus, has much better processability. On the other hand, the dispersion of each of Comparative Examples 4 and 5 containing entangled-type carbon nanotubes has an excellent effect in terms of viscosity compared to Examples since the entangled-type carbon nanotubes are easily dispersed in the process of preparing the dispersion, but can be confirmed to have significantly higher slurry powder resistance than Examples of the present invention in terms of electrical conductivity.

From the above, it can be confirmed that the carbon nanotube composition of the present invention has both excellent electrical conductivity, which is an advantage of bundled-typed carbon nanotubes, and excellent dispersibility and processability, which are advantages of entangled-type carbon nanotubes.

### Experimental Example 3. Observation of morphology of carbon nanotubes of Examples and Comparative Examples

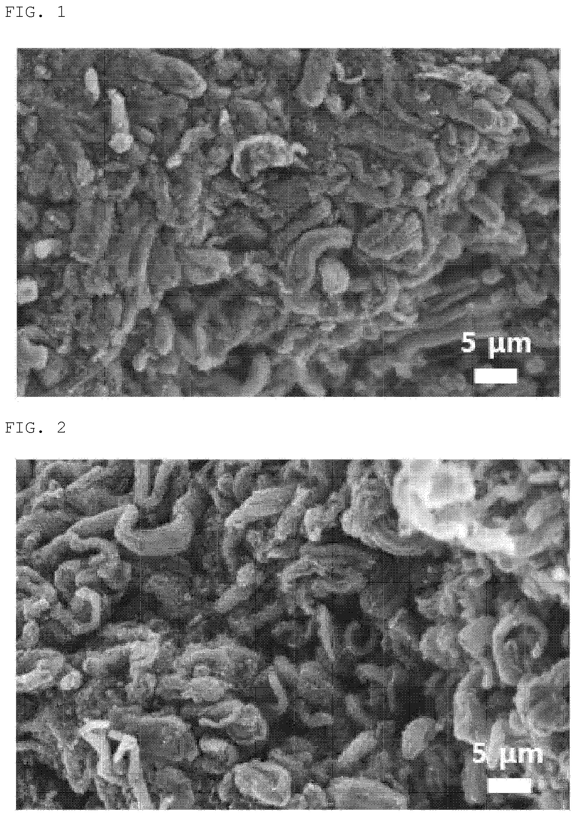

The morphology of the carbon nanotube composition obtained in each of Examples and Comparative Examples was observed with using an SEM image. First of all, the morphology of the carbon nanotubes obtained in Examples 1 and Comparative Examples 3 and 4 was observed using SEM images at x3000 magnification, and the results are respectively shown in FIGS. 1 to 3.

As can be observed in FIGS. 1 to 3, the carbon nanotubes of Comparative Example 3 exhibited a bundled shape, and the carbon nanotubes of Comparative Example 4 exhibited an entangled shape, and it has been confirmed that the carbon nanotubes according Examples of the present invention exhibited a shape very similar to that of the carbon nanotubes of Comparative Example 3, which is bundled-type carbon nanotubes. From the above, it has been confirmed that the carbon nanotube composition of the present invention is similar to entangled-type carbon nanotubes in terms of bulk density and yield, but has an actual shape of bundled-type carbon nanotubes.

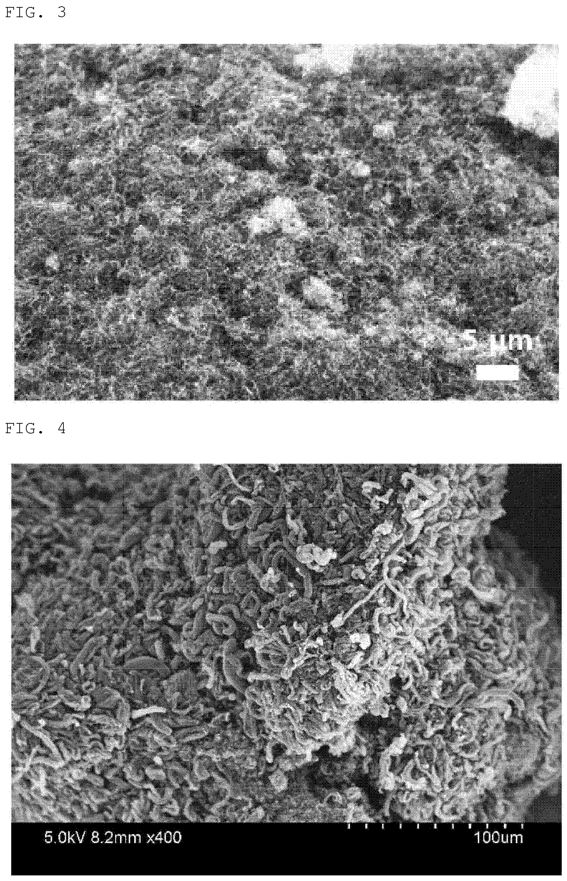

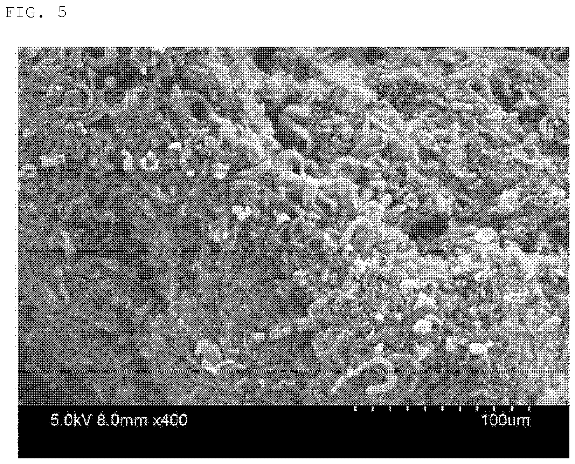

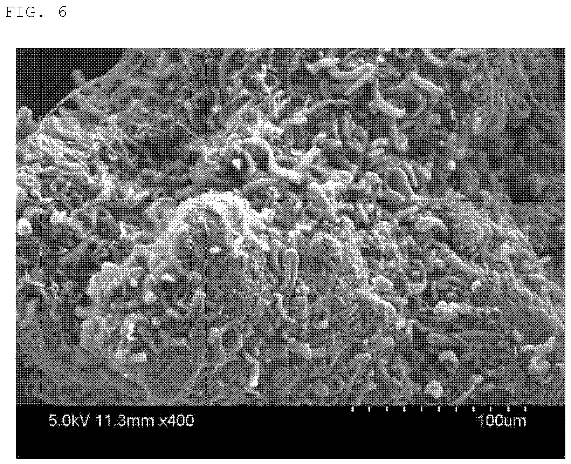

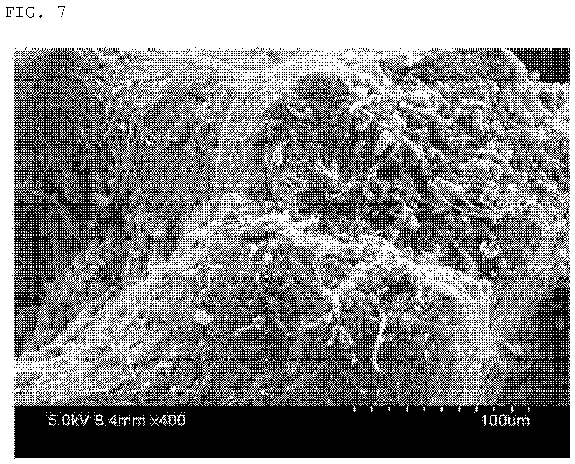

Furthermore, in order to compare the morphology of carbon nanotubes according to the volume and particle size density, the morphology of the carbon nanotubes obtained in Examples 8 to 11 was observed using SEM images at x400 magnification, and the results are sequentially shown in FIGS. 4 to 7. As can be confirmed in FIGS. 4 to 7, as the density of the carbon nanotube composition increases, the morphology partially changes from a bundled type to an entangled type in which fine carbon nanotube strands are intertwined and entangled together, and this is expected to be due to an increase in the yield of carbon nanotubes as the synthesis temperature of the carbon nanotubes increases, and an increase in the density in carbon nanotube particles as the grain size of the catalyst on the support increases.

## Claims

1. A carbon nanotube composition having a volume density of 500/mm³ to 2500/mm³ defined by Equation 1 below: Volume density = Yield of carbon nanotubes / Volume of carbon nanotube composition wherein the yield of carbon nanotubes is calculated by (Mass of carbon nanotube composition - Mass of catalyst in carbon nanotube composition) / (Mass of catalyst in carbon nanotube composition).

2. The carbon nanotube composition of claim 1, wherein the carbon nanotube composition has a particle size density of 50/mm to 120/mm defined by Equation 2 below: Particle size density = Yield of carbon nanotubes / Volume average particle size of carbon nanotubes wherein the yield of carbon nanotubes is calculated in the same manner as in Equation 1.

3. The carbon nanotube composition of claim 1, wherein the carbon nanotube composition has a bulk density of 40 kg/m³ to 85 kg/m³.

4. The carbon nanotube composition of claim 1, wherein the yield of carbon nanotubes is 30 or greater.

5. The carbon nanotube composition of claim 1, wherein the specific surface area of the carbon nanotubes is 160 m²/g or greater.

6. The carbon nanotube composition of claim 1, wherein the carbon nanotube composition comprises bundled-type carbon nanotubes.

7. A method for preparing the carbon nanotube composition according to claim 1, the method comprising:
(S1) filling a fluidized bed reactor with a supported catalyst in which Co and V are supported on boehmite, and carbon nanotube powder for a fluidized bed; and
(S2) synthesizing carbon nanotubes by reacting while supplying a carbon source gas into the fluidized bed reactor.

8. The method of claim 7, wherein:
the Co content of the supported catalyst is 22 wt%; and
the molar ratio between Co and V in the supported catalyst is 2:1 to 4:1.

9. The method of claim 7, wherein the step S2 is to perform heating such that the internal temperature of the fluidized bed reactor is to be 650 °C to 750 °C.

10. The method of claim 7, wherein:
the step S2 is to supply the carbon source gas and a flowing gas together; and
the supply flow ratio between the carbon source gas and the flowing gas is 1:1 to 1:10.

11. A carbon nanotube dispersion comprising:
the carbon nanotube composition according to any one of claims 1 to 6; and
a dispersion medium.

12. The carbon nanotube dispersion of claim 11, wherein the content of the carbon nanotube composition in the dispersion is 0.5 wt% to 5 wt%.

13. The carbon nanotube dispersion of claim 11, wherein the dispersion comprises one or more dispersants selected from the group consisting of styrene butylene rubber (SBR), carboxymethyl cellulose (CMC), hydrogenated acrylonitrile butatiene rubber (H-NBR), polyvinylpyrrolidone (PVP), and polyvinylbutyral (PVB).

14. The carbon nanotube dispersion of claim 11, wherein the initial viscosity of the carbon nanotube dispersion is 15,000 cP or less.

15. A positive electrode slurry composition comprising:
the carbon nanotube dispersion according to any one of claims 11 to 14;
a positive electrode active material;
a binder; and
a solvent.
